# EUROPEAN PATENT APPLICATION

(11) **EP 4 122 894 A1**
(43) Date of publication of application: **25.01.2023**
(21) Application number: 21187120.7
(22) Date of filing: 22.07.2021
(51) Int. Cl.: C02F 1/44, C02F 1/46, C02F 1/467, C02F 1/70, F24F 8/28, B01D 61/14, B01D 61/16, C02F 103/02, C02F 1/50, C02F 1/48, C02F 1/72, C02F 1/68, C02F 1/76

(54) **A METHOD AND SYSTEM FOR PURIFYING WATER**

(71) Applicant: Newtec Water Systems NV, 2800 Mechelen (BE); Wateris BVBA, 9070 Destelbergen (BE); Vawat BVBA, 9870 Zulte (BE)
(72) Inventor: ESSELENS, Dirk, 2800 Mechelen (BE); VAN ASSCHE, Eddy, 9870 Zulte (BE); HEYMAN, Thierry, 9070 Destelbergen (BE); SANCZUK, Toon, 9070 Destelbergen (BE)
(74) Representative: BiiP cvba

(57) **Abstract**

The present invention is directed to a process for purifying water comprising the steps of:
i. treating water by means of surface tension reducing process,
ii. subsequently treating the water having reduced surface tension by means of a membrane filtration process,
iii. subsequently treating the filtered water with a biocide.

In addition, the present invention is directed to a system for purifying water comprising a water inlet followed by a surface tension reducing process unit, followed by a membrane filtration unit, followed by a biocide treatment unit and a purified water outlet.

## Description

### TECHNICAL FIELD

The present invention relates to water purification systems and methods. In particular, the present invention relates to the use of water purification systems to combat Legionella bacterial contamination of industrial and commercial water.

### BACKGROUND

Legionella is a bacterium that occurs in various (drinking) water systems. Under the right growing conditions, the bacteria can multiply. Infection with legionella germs can lead to legionellosis. Contamination takes place by inhaling the bacteria in very small droplets of water (aerosol) that can be released into the air when water is nebulized, for example when showering or after nebulization in a cooling tower. The germ grows in water with a temperature between 20 and 50°C, with a maximum peak between 35 and 40°C. Below 20°C the germ does not multiply, above 55°C it dies. The higher the temperature, the faster the killing. To survive, microorganisms need nutrients such as amino acids, manganese and iron. These nutrients can be found in the biofilm that forms on the inside of the pipes and their components. Biofilm refers to an aggregation of microorganisms (e.g. Legionella and other bacteria) surrounded by an extracellular matrix or slime adherent on a surface, or any combination thereof. Further growth-promoting factors are stagnant water (dead-end pipes or insufficiently used taps) and deposits or limescale.

For all water system types (except cooling towers), a measured Legionella concentration below 100 CFU/L is considered to be at the detection limit. Between 1 and 10 CFU/mL (1,000 to 10,000 CFU/L), Legionella amplification could be possible. For example, in high-risk facilities aimed at the treatment, care or housing of sensitive people (mainly the seriously ill and the elderly) and where exposure to aerosol is possible, extra vigilance and follow-up has to be established.

Legionella growth in water distribution systems is currently limited through chemical, thermal or ultraviolet treatment methods, of which the most common are:
- temperature control-i.e., keeping all cold water below 25 °C and all hot water above 55 °C. The high cost incurred with this method arises from the extensive retrofitting required for existing complex distribution systems in large facilities and the energy cost of chilling or heating the water and maintaining the required temperatures at all times and at all distal points within the system.
- A very effective chemical treatment is chlorine. For systems with marginal issues, chlorine provides effective results at 0.25 ppm residual in the hot water system. For systems with significant Legionella problems, temporary shock chlorination-where levels are raised to higher than 2 ppm for a period of 24 hours or more and then returned to 0.25 ppm-may be effective. These high levels of chlorine penetrate biofilm, killing both the Legionella bacteria and the host organisms.
- Further, also chlorine dioxide is effectively used.
- Copper-silver ionization is an effective biocide process to control Legionella in potable water distribution systems found in health facilities, hotels, nursing homes, and most large building
- Ultraviolet light, in the range of 200 to 300 nm, can inactivate Legionella

A disadvantage of current techniques is that in case Legionella break-out, high amounts of biocide are required to force the concentration below 10,000 CFU/L, and further below 1,000 CFU/L, or even below detection limit.

Keeping a water distribution network substantially free from Legionella (i.e. below 1,000 CFU/L, or even below detection limit) and stable on the long term needs very regular follow up, and requires interventions and high competences from the technical staff.

In addition, since in tap water, chlorine is and becomes more and more unfavourable in view of the consumer's perception of taste and drinking water quality, a lower concentration chlorine is aimed at.

Another disadvantage is that conventional techniques wherein chlorine reacts with biofilm may result in generation of undesired and potentially harmful chemical by-products such as trihalomethanes (THM), or adsorbable organically bound halogens (AOX).

In addition, in case biofilm is not reduced significantly, corrosion underneath and due to the biofilm may occur in the piping infrastructure.

Considering the above, it is an objective of the present invention to provide a water purification method and process requiring less biocide than conventionally used to keep the Legionella concentration within standards, i.e. lower than 1000 CFU/L or even lower than100 CFU/L.

In addition, in case of Legionella break-out, less amounts of biocide are required to force the concentration below 10,000 CFU/L, and further below 1,000 CFU/L, or even below detection limit.

In also an objective of the present invention, to provide a water purification method and process wherein addition of harmful chemicals is avoided.

Further, it is an objective of the present invention, to provide a water purification method and process able to minimize biofilm deposits such that the harmful by-products from chemical reaction with a biocide is reduced, and such that corrosion underneath and due to biofilm may be reduced as well.

Further, it is an objective of the present invention to provide a water purification method and process, requiring less interventions from technical staff members.

### SUMMARY OF THE INVENTION

In first aspect of the present invention, a process for purifying water is provided comprising the steps of:
i. treating water by means of surface tension reducing process
ii. subsequently treating the water having reduced surface tension by means of a membrane filtration process
iii. subsequently treating the filtered water with a biocide.

In a second aspect, a system for purifying water is provided comprising a water inlet followed by a surface tension reducing process unit, followed by a membrane filtration unit, followed by a biocide treatment unit and a purified water outlet.

### DETAILED DESCRIPTION

With the embodiments described below not being at all limiting, variants of the invention only comprising a selection of features described can in particular be considered, subsequently isolated from the other features described, if this selection of features is sufficient to give a technical advantage or to differentiate the invention with respect to the prior art. This selection comprises at least one feature, preferably operational without structural details, or with only some of the structural details if this part only is sufficient to give a technical advantage or to differentiate the invention with respect to the prior art.

In first aspect of the present invention, a process for purifying water is provided comprising the steps of:
i. treating water my means of surface tension reducing process
ii. subsequently treating the water having reduced surface tension by means of a membrane filtration process
iii. subsequently treating the filtered water with a biocide.

In the context of the patent application, the water to be purified may be tap water or municipal water, potable water, rain water, surface water, waste water, process water, or cooling water.

In the first step of the water purification process, water to be purified is exposed to a surface tension reducing process. This process may lower the surface tension of the water at the interface between the water and the piping infrastructure of the water distribution network, and additionally at the interface between the water and the biocide injected in the third step.

Without being bound by any theory, the beneficial effect of surface tension reduction is that flowing water encounters less friction at the walls of the piping resulting in increased speed at the walls and biofilm build-up is reduced. This also has an effect on the membrane filtration of the second step in that fouling build-up occurs more slowly, resulting in reduced number of back-flushing cycles required. Another effect of reduced surface tension may be that biocide injected in the third step becomes dispersed more efficiently in the filtered water and penetrated more efficiently in the reduced biofilm.

Further, the combination of reduced biofilm build-up at the piping walls in the first step and the membrane filtration process which efficiently separates substances responsible for biofilm build-up from the water in the second step, biofilm build-up downstream will slowly reduce. Consequently, the amount of biocide required in the third step can also be reduced and may be lowered over time to a minimum while maintaining a sufficient concentration throughout the entire installation, for example less than 0.5 ppm, or even 0.2 ppm chlorine may be sufficient. Without the first and second process step, a high concentration of biocide has to be injected , e.g. higher than 0.25 mg/l chlorine, at the beginning of the piping infrastructure in order to still have an adequate effect of the biocide at the end, e.g. at the tap.

Therefore, the method of the present invention may result in reduced biofilm build-up downstream the third process step and even decrease biofilm build-up to a level of substantially no presence of biofilm any more in the piping infrastructure, and in less or substantially no presence of biotope suitable for Legionella development. Therefore, a method in accordance with the present invention may significantly lower the risk for Legionella out-break.

In an embodiment of the present invention, the surface tension reducing process may comprise treatment with a surfactant. In the context of the present invention, surfactants are compounds that lower the surface tension (or interfacial tension) between two liquids, between a gas and a liquid, or between a liquid and a solid.

In the present invention, the surfactant may be applied as a compound present in a detergent, a foaming agent, a wetting agent, or a dispersant.

In another embodiment of the present invention, the surface tension reducing process may comprise physical water treatment (PWT). Physical water treatment (PWT) is defined as a non-chemical method of water treatment utilized for the purpose of scale prevention or mitigation. Known techniques are for example exposing water to permanent magnets, or solenoid coils, or high-voltage electrodes. These techniques are known to result in surface tension reduction, for example by approximately 8% under repeated treatment as in cooling-tower applications.

In a preferred embodiment, as a PWT technique, water to be purified is exposed to a catalyst, preferably metal catalyst and more preferably a full metal catalyst. Full metal catalysts as may be used here are for example described in WO02100534A1. Preferably, in the present invention, a catalyst is used without addition of an oxidant, as for example peroxide, to the water to be purified in the first step. As explained further in the text and without being bound by any theory, reduction of surface tension as a first step in the purification process of the present invention is sufficient and chemical treatment in the first step is not required.

In the second step of the water purification process, the water with reduced surface tension is filtered by membrane filtration. In the context of the present invention, any filtration technique making use of some type of membrane as a physical barrier with highly specialized characteristics such that Legionella bacteria in the feed stream cannot pass through is suitable. In an embodiment, the membrane filtration process may be microfiltration, ultrafiltration, or nanofiltration. More preferably, ultrafiltration may be used as also proteins, fats and polysaccharides are retained, resulting in more effective retention of biofilm, while still operating at acceptable flow rate and energy consumption.

In the third step of the water purification method, filtered water is treated with a biocide. In the context of the present invention, a biocide is defined as a chemical substance intended to destroy, deter, render harmless, or exert a controlling effect on any harmful organism in the water.

In an embodiment of the present invention, any effective biocide affecting Legionella and legally allowed in the applications concerned may be used, as for example hydrogen peroxide, or ionized copper and silver (the latter not allowed in a number of EU countries). Preferably, the biocide contains chlorine and / or hypochlorite and / or chlorine dioxide and / or other chlorine-containing disinfectants.

In a preferred embodiment, the filtered water is exposed to chlorine which is generated by exposing chlorine-based salt or brine to electrolysis. The chlorine-based salt may be sodium chloride, potassium chloride, magnesium chloride, or any combination thereof. It is appreciated that a free active chlorine generated by electrolysis in a chlorine generator is preferred, because this process only requires regular input of harmless chlorine-based salt.

In particularly preferred embodiment in accordance with the present invention, a process for purifying water is provided comprising the steps of:
i. treating water my means of metal catalyst,
ii. treating catalysed water by means of an ultrafiltration process,
iii. treating the filtered water with chlorine.

In a second aspect of the present invention, a system for purifying water is provided, comprising a water inlet followed by a surface tension reducing process unit, followed by a membrane filtration unit, followed by a biocide treatment unit and a purified water outlet.

The surface tension reducing process unit may be adapted for applying any of the surface tension reducing techniques as mentioned before in this text.

The membrane filtration unit may be adapted for applying any of the membrane filtration techniques as mentioned before in this text.

The biocide treatment unit may be adapted for applying any of the biocide treatment techniques as mentioned before in this text.

In a preferred embodiment, the biocide treatment unit may additionally comprise a water retention tank in order to optimize the time of exposure to biocide.

The purified water leaving the purification system of the present invention may contain a legionella concentration below 1000, or even below 100 CFU/L, i.e. below the detection limit, measured in accordance with ISO 11731.

Over time, the presence of biofilm downstream the system of the present invention will decrease and may even decrease to a level of substantially no presence of biofilm anymore in the piping infrastructure, resulting in less or substantially no presence of biotope suitable for Legionella development and significantly lowering the risk for Legionella out-break downstream.

Further, as the system of the present invention is able to cope with upstream legionella outbreak due to the membrane filtration unit, enabling maintaining a stable environment downstream the system, less interventions from technical staff members are required as well.

In a preferred embodiment in accordance with the present invention, a system is provided, wherein the surface tension reducing process unit is a metal catalyst unit, wherein the membrane filtration unit is an ultrafiltration unit, and wherein the biocide treatment unit comprising a chlorine generator. After the water meter, a metal catalyst is placed, which activates the water and reduces its surface tension. This prevents the formation of biofilm and deposits on membranes, resins, pipe walls and other surfaces. Subsequently, the activated water is filtered over an ultra-fine (0.02 µm) membrane in an ultrafiltration unit. Contaminants, incoming microorganisms, macromolecules, colloids and proteins which are nutrients for biofilm are separated from the water. Regular backflushing may be done at water pressure with water from an expansion vessel. Finally, a low concentration of free chlorine generated by a chlorine generator is injected. A retention vessel ensures a homogeneous distribution of the free active chlorine and sufficient contact time with the water. The installation is monitored remotely.

Each of the process units, preferably all of them, may be monitored remotely via an internet connection.

## Claims

1. A process for purifying water comprising the steps of:
a. treating water my means of surface tension reducing process
b. subsequently treating the water having reduced surface tension by means of a membrane filtration process
c. subsequently treating the filtered water with a biocide.

2. A process according to claim 1, wherein the surface tension reducing process comprises treatment with a surfactant.

3. A process according to claim 2, wherein the surfactant is applied as a compound present in a detergent, a foaming agents, a wetting agent, or a dispersant.

4. A process according to claim 1, wherein the surface tension reducing process comprises physical water treatment (PWT).

5. A process according to claim 4, wherein the physical water treatment comprises treatment with a metal catalyst.

6. A process according to claim 1, wherein membrane filtration process comprises microfiltration or ultrafiltration.

7. A process according to claim 1, wherein the biocide contains chlorine.

8. A process according to claim 7, wherein the filtered water is exposed to chlorine which is in-situ generated by exposing chlorine-based salt or brine to electrolysis.

9. A process according to claim 1, comprising the steps of:
a. treating water my means of metal catalyst,
b. treating catalysed water by means of an ultrafiltration process,
c. treating the filtered water with chlorine.

10. A system for purifying water comprising a water inlet followed by a surface tension reducing process unit, followed by a membrane filtration unit, followed by a biocide treatment unit and a purified water outlet.

11. A system according to claim 10, wherein the biocide treatment unit comprises a water retention tank.

12. A system according to claim 10 or 11, wherein the surface tension reducing process unit is a metal catalyst unit, wherein the membrane filtration unit is an ultrafiltration unit, and wherein the biocide treatment unit comprising a chlorine generator.
